# EUROPÄISCHE PATENTSCHRIFT

(11) **EP 0 851 832 B1**
(45) Veröffentlichungstag und Bekanntmachung des Hinweises auf die Patenterteilung: **18.08.1999**
(21) Anmeldenummer: 96929159.0
(22) Anmeldetag: 16.09.1996
(51) Int. Cl.: B65G 21/20, B21D 51/26

(54) **ANLAGE ZUM BEARBEITEN VON GEFÄSSEN, TRANSPORTVORRICHTUNG ZUM TRANSPORTIEREN VON GEFÄSSEN UND PALETTEN DAFÜR**
PLANT FOR PROCESSING CONTAINERS, TRANSPORT DEVICE AND PALLETS FOR CONTAINERS
INSTALLATION DE TRAITEMENT DE CONTENANTS, DISPOSITIF POUR TRANSPORTER CES CONTENANTS ET PALETTES POUR CES CONTENANTS

(30) Priorität: 20.09.1995 CH 265795; 26.03.1996 DE 29605595 U
(43) Veröffentlichungstag der Anmeldung: 08.07.1998
(73) Patentinhaber: Brainpower Consulting Gmbh, 8370 Sirnach (CH)
(72) Erfinder: BOLTSHAUSER, Werner, CH-9606 Bütschwil (CH)
(74) Vertreter: Stocker, Kurt
(86) Internationale Anmeldenummer: CH9600318
(87) Internationale Veröffentlichungsnummer: WO9711015

(56) Entgegenhaltungen:
- EP-A- 0 402 703
- EP-A- 0 600 130
- FR-A- 2 416 855
- GB-A- 2 165 515
- PATENT ABSTRACTS OF JAPAN vol. 95, no. 7, 31.August 1995 & JP,A,07 097034 (MITSUBISHI MATERIALS CORP), 11.April 1995,

## Beschreibung

Die Erfindung bezieht sich auf Anlagen nach dem Oberbegriff des Anspruches 1, auf Vorrichtungen nach dem Oberbegriff des Anspruches 8 und auf Paletten nach dem Oberbegriff des Anspruches 10.

Bei der Bearbeitung und insbesondere bei der Herstellung von Gefässen werden diese zur Durchführung von Behandlungsschritten zu Bearbeitungsstationen geführt, diesen gegebenenfalls übergeben, behandelt und anschliessend weitergeführt. Um die Gefässe kostengünstig bearbeiten zu können, müssen die Fördervorrichtungen und die Bearbeitungsstationen so ausgebildet und auf einander abgestimmt sein, dass ein hoher Gefäss-Durchsatz mit einfachen Mitteln möglichst störungsfrei erzielbar ist. Es hat sich nun gezeigt, dass verschiedene Anlagen zum Herstellen von Gefässen aufgrund eines über lange Zeit unveränderten Förderkonzeptes lediglich durch Verbesserungen an den einzelnen Bearbeitungsstationen weiter entwickelt wurden.

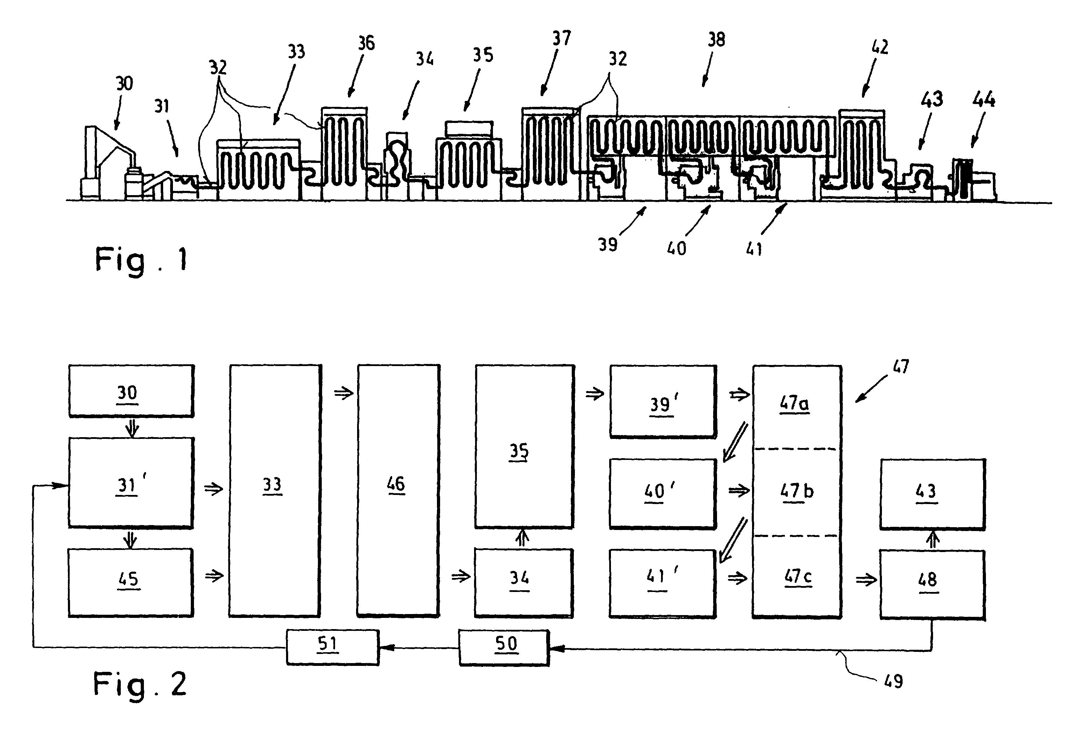

Die Bindung an ein scheinbar unantastbares Förderkonzept ist insbesondere bei der Herstellung von fliessgepressten Gefässen, wie etwa Aerosoldosen oder auch Tuben, deutlich erkennbar. Fig. 1 zeigt schematisch den Grundaufbau der bekannten Anlagen zur Herstellung von Aluminiumdosen. Der Herstellungsvorgang beginnt mit einem Pressvorgang der Presse 30. Direkt anschliessend in einer Rohbearbeitungs-Vorrichtung 31 erfolgt das Zuschneiden und gegebenenfalls das Bürsten der rohen Gefässe, bzw. Dosen. Anschliessend werden die Dosen auf Dorne eines Kettenförderers 32 aufgesetzt und durch eine Reinigungsstation 33 mit Wasch- und Trocknungsvorrichtung geführt. Nach dem Reinigen werden die Dosen in einer Innenlack-Vorrichtung 34 innen mit Lack beschichtet. Dazu muss jede Dose vom Dorn des Kettenförderes abgenommen, in eine Halteschale abgelegt und dann in eine hülsenartige, drehbare Halterung eingeführt werden. Der Innenlack wird von einer in das Doseninnere bewegbaren Düse abgegeben, während die Dose etwa gedreht wird. Danach muss jede Dose von der hülsenartigen Halterung in eine Ofenschale eingelegt und darin zum Trocknen durch einen ersten Ofen 35 geführt werden bevor sie wieder auf einen Dorn eines Kettenförderers 32 aufgesetzt wird.

Zum Betätigen der für die Innenlackierung nötigen Dosenbewegungen entlang der Dosenachse, werden energieintensive Druckluftstösse eingesetzt. Diese Druckluftstösse, die Bewegungen der Halteschalen und die Bewegungen der Förderkette müssen mit aufwendigen Steuerungen exakt synchronisiert werden. Die Halteschalen, die hülsenförmigen Halterungen und die Ofenschalen sind dem jeweils aktuellen Dosendurchmesser angepasst und müssen für die Produktion von Dosen mit anderen Durchmessern ausgewechselt werden, was zu grossen Stillstandzeiten führt.

Um kurzzeitig Durchsatzunterschiede der Innenlack-Bearbeitungsstation 34, 35 und der Reinigungsstation 33 zu kompensieren, ist ein erster Kettenspeicher 36 vorgesehen, der die Zahl der fördernden Dorne reduziert bzw. erhöht und entsprechend die Zahl der zurücklaufenden Dorne erhöht bzw. reduziert. Ein zweiter Kettenspeicher 37 ist nach der Innenlack-Station 34, 35 und vor einer Aussen-Bearbeitungsstation 38 vorgesehen. Die Aussen-Bearbeitungsstation 38 umfasst eine Grundierungs- 39, eine Druck- 40 und eine Überlackvorrichtung 41. In allen drei Vorrichtungen 39-41 werden die Dosen von der Kette auf einen Dorn aufgesetzt, beschichtet, wieder auf die Kette aufgesetzt und durch einen Trocknungsofen geführt. Dabei treten aufgrund der nötigen Dosenbewegungen im wesentlichen die gleichen Probleme auf, wie bei der Innenlackierung.

Nach der Aussenbeschichtung 38 ist ein dritter Kettenspeicher 42 und daran anschliessend eine Endformungsvorrichtung 43, etwa bei Aerosoldosen zum Ausformen des Dosenhalses, und eine Verpackungsvorrichtung 44 vorgesehen.

Das Fördern mit Kettenförderern, die in festen Abständen seitlich vorstehende Dornen zum Halten der Dosen umfassen, ist das in der gesamten Herstellungslinie verwendete Förderprinzip. Dabei sind die Dosen immer eindimensional und mit festen Abständen hintereinander aufgereiht und werden im Mittel mit der gleichen Geschwindigkeit bewegt. Diese im wesentlichen starre Dosenbewegung durch die ganze Anlage führt bei den Bearbeitungsstationen zu SynchronisationsProblemen. Um betriebs- oder störungsbedingte lokale Förderschwankungen auszugleichen, müssen mechanisch aufwendige Kompensations- oder Speichervorrichtungen vorgesehen werden. Zudem muss die Dosenaufenthaltszeit in einem Bearbeitungsbereich im wesentlichen durch die Kettenlänge in diesem Bereich festgelegt werden, was, aufgrund der langen Trocknungszeiten in den Öfen, zu einer äusserst langen Förderkette führt. Aufgrund des Ketten-Förderkonzept ergeben sich starr aufgebaute, lineare Produktionslinien, die nur in grossen Hallen Platz finden und bei denen alle Bearbeitungsstationen genau aufeinander abgestimmt sein müssen. Zudem ist der Wartungsaufwand für die Förderkette und der Energieverlust der Öfen sehr hoch.

Aus der FR-A-2 416 855 ist eine Lösung bekannt, bei der Weissblechdosen nach dem Bedrucken mittels eines Magnetförderers weitergeführt werden. Diese Lösung kann aber bei Aluminiumdosen nicht eingesetzt werden und zudem besteht bei Dosen, die über den ganzen Dosenmantel bedruckt sind, die Gefahr, dass im Bereich der an den Magnetförderer anliegenden Stirnseite der Dose Farbe auf die Förderfläche gelangt.

Aus der EP-A-600 130 ist ein becherförmiger Artikelhalter bekannt, der eingesetzte Artikel im Bereich deren Mantelfläche mit zwei, einander gegenüberliegend angeordneten, Pressteilen festhält und im Bodenbereich einen Magneten umfasst. Diese Artikelhalter werden auf einem Bandförderer mit einem Magnetmittel unter der Förderfläche an dieser gehalten. Die Nachteile dieses Artikelhalters bestehen darin, dass sich der Magnet ungewollt an ferromagnetischen Teilen des Förderers festsetzen kann und insbesondere auch ferromagnetische Partikel als Verunreinigungen anzieht und mitführt. Die mitgeführten Verunreinigungen können bei der Bearbeitung der Artikel zu Störungen führen. Bearbeitungsschritte mit hohen Temperaturen können zu einer teilweisen Entmagnetisierung des Magneten und zu schlechteren Halteeigenschaften führen. Zudem verunmöglichen die Becherform und die Pressteile eine Bearbeitung der Aussenseite des Artikelmantels.

Aus der EP-A-402 703 ist ein Transportsystem für Spulen bekannt, bei dem von einem Transportband vorstehende Magnete ferromagnetische Paletten in festen Abständen auf dem Band mitführen. Mit dieser Lösung entstehen Synchronisationsprobleme, die mit aufwendigen Anlageteilen gelöst werden müssen.

Die erfindungsgemässe Aufgabe besteht nun darin, eine Anlage zum Bearbeiten von Gefässen aus beliebigem, insbesondere nicht magnetischem Material zu beschreiben, die einfacher und flexibler aufgebaut ist und mit einem kleineren Synchronisationsaufwand verbunden ist. Zudem soll die Vorrichtung zum Transportieren so ausgebildet sein, dass das Übergeben an Bearbeitungsstationen vereinfacht wird.

Die Lösung der Aufgabe gelingt durch die Verwirklichung der Oberbegriffsmerkmale zusammen mit den kennzeichnenden Merkmalen des Anspruches 1 bzw. 8. Beim Lösen der erfindungsgemässen Aufgabe wurde zudem die erfinderische Palette gemäss Anspruch 10 gefunden. Alternative bzw. vorteilhafte Ausbildungen sind jeweils durch die Merkmale der abhängigen Ansprüche beschrieben. Ein erfindungsgemäßes Verfahren ist in Anspruch 12 angegeben.

Bei der Lösung der Aufgabe wurde erkannt, dass die oben anhand des Standes der Technik beschriebenen Nachteile im wesentlichen dadurch entstehen, dass die Dosen auf Dornen von Förderketten transportiert werden. Indem die Dosen bei der erfinderischen Lösung von Paletten auf bewegbaren Förderflächen transportiert werden, entsteht im Fördervorgang die zum Verhindern von Synchronisationsproblemen nötige Flexibilität. Bei einer konstanten Bewegungsgeschwindigkeit der Förderfläche, wie etwa des Förderbandes eines Bandförderers, kann die Bewegungsgeschwindigkeit der Dosen und somit auch der Abstand zwischen den Dosen, variieren, weil zwischen der Förderfläche und der daran anliegenden Anschlussfläche der Palette ein Schlupf möglich ist. Mittels Leit- und Anschlagselementen, die die Bewegung der Paletten auf der Förderfläche beeinflussen, können Staubereiche, zum Kompensieren von Durchsatzschwankungen, und Übergabebereiche, zum Bereitstellen von Dosen an Übergabestellen ausgebildet werden. Die Bearbeitungsstationen holen gemäss ihrer Bearbeitungsfrequenz zu bearbeitende Dosen aus einem Staubereich oder von einer Übergabestelle und führen diese nach der Bearbeitung synchronisationsfrei auf eine Förderfläche.

Um, ohne Einschränkung der relativen Beweglichkeit auf der Förderfläche, zumindest in kritischen Förder-Bereichen zu verhindern, dass sich die Anschlussfläche ungewollt von der Förderfläche löst bzw. die Dose mit der Palette kippt, ist die Palette zumindest teilweise aus magnetisierbarem Material ausgebildet und der Förderfläche ist in diesem Bereich wenigstens ein Permanentmagnet- oder gegebenenfalls ein Elektromagnet-Element zugeordnet, so dass die Palette aufgrund von magnetischen Kräften an der Förderfläche haftet. Dadurch ist es möglich, dass die Förderfläche beliebig ausgerichtet werden kann, ohne dass sich die Paletten mit den Dosen davon lösen. Diese beliebige Ausrichtbarkeit ist bei der Übergabe an Bearbeitungsstationen und insbesondere auch bei der Bearbeitung in Bearbeitungsstationen vorteilhaft.

Die Palette umfasst eine Paletten-Anschlussfläche zum Anlegen an eine Förderfläche und eine Verbindungsfläche mit wenigstens einer Verbindungseinrichtung zum Verbinden der Palette mit einer Dosenfläche, wobei die Paletten-Anschlussfläche und die Verbindungsfläche im wesentlichen parallel angeordnet sind. Um bei zylindrischen Dosen mit einem offenen Ende und einer dem offenen Ende gegenüberliegenden Dosenabschlussfläche eine bevorzugte Dosenorientierung relativ zur Förderfläche zu erzielen, wird die Dosenabschlussfläche mit der Verbindungsfläche verbunden. Dadurch ist gewährleistet, dass die Dosenachse immer im wesentlichen vertikal zur Förderfläche ausgerichtet ist.

Um die Dosen in horizontaler Lage an eine Bearbeitungsstation, bzw. ein Halteelement derselben, zu übergeben, wird die Förderfläche im Übergabebereich somit im wesentlichen vertikal ausgerichtet. Aufgrund der Anordnung der magnetisch gehaltenen Palette am Dosenboden, ist die Dose von der Dosenöffnung her frei zugänglich und kann ohne das Ablegen in eine Halteschale direkt auf einen Haltedorn für die Aussenbearbeitungen oder in eine Hülse für die Innenbearbeitungen geschoben werden. Die Verwendung von magnetisierbaren Paletten hat den Vorteil, dass auf die Betätigung der Dosenbewegungen mit Druckluftimpulsen gegebenenfalls verzichtet werden kann. Die Betätigung, bzw. die beim Zuführen oder Abnehmen nötige Verschiebung in Richtung der Gefässachse, erfolgt bevorzugt mit elektromagnetischen Betätigungsmitteln. Beim Umstellen der Produktionslinie auf Dosen mit einem anderen Durchmesser fällt das Auswechseln der Halteschalen weg. Es müssen lediglich die Halteelemente ausgewechselt werden.

In bevorzugten Ausführungsformen der Anlage wird die Dose für die Innenbehandlung nicht in eine Hülse eingeführt, sondern sie wird von einer, die Palette magnetisch haltenden, magnetischen Haltefläche getragen. Um die Dose beim Besprühen mit Innenlack in eine Drehbewegung versetzen zu können, wird die Haltefläche insbesondere drehbar ausgebildet. Die magnetischen Halteflächen haben gegenüber den Hülsen den Vorteil, dass sie beim Wechsel zu einem anderen Dosendurchmesser nicht ausgewechselt werden müssen, weil sie zum Halten von verschieden grossen Dosen auf gleich grossen Paletten und vorzugsweise auch zum Halten von verschieden grossen Paletten ausgebildet werden können.

Die Dosen werden gegebenenfalls mit einem magnetischen Drehteller und/oder festen oder bewegten, mit den Paletten in Führungskontakt tretenden Führungen in Lagen bewegt, die den Halteelementen gegenüber liegen. Falls die Bewegung des Drehtellers synchron und konzentrisch mit der Bewegung einer Drehtrommel mit Halteelemente erfolgt, kann die Übergabe auch auf bewegte Halteelemente erfolgen.

In einer Reinigungsstation ist es zum Ausfliessenlassen der Reinigungsflüssigkeit nötig, dass das offene Dosenende nach unten gerichtet ist. Dies kann mit einem Magnetförderer, dessen Förderfläche nach unten weist problemlos erreicht werden. Durch das Ersetzen der Kettenförderer mit Magnetförderern wird eine beliebige Ausrichtbarkeit der geförderten Dosen möglich. Zudem ist der Wartungsaufwand für die Förderer deutlich kleiner und durch das Vorsehen von Staubereichen, insbesondere auf Bandförderern, kann auf aufwendige Kettenspeicher verzichtet werden. Aufgrund des neuen Förderkonzeptes können die Anlagen viel flexibler aufgebaut werden. Anstelle der linearen Produktionslinien treten etwa vorzugsweise mit Bandförderern verbundene Bearbeitungsbereiche, die seitlich oder auch vertikal versetzt angeordnet sein können. Die Anlage kann somit den vorhandenen Produktionsräumen angepasst werden, was bei den Anlagen gemäss dem Stande der Technik nicht oder nur mit grossem Aufwand möglich ist.

Die Fördervorrichtung umfasst Leitelemente, welche die von der Förderfläche bewegten Gefässe, insbesondere durch führende Berührungskontakte mit Paletten, entlang gewünschter Wege führbar machen, wobei die Leitelemente gegebenenfalls von einer Betätigungseinrichtung bewegbar sind. Dadurch können mit einfachen Mitteln Trennvorrichtung, zum Aufteilen der zugeförderten Gefässe auf mindestens zwei Teillinien, bereitgestellt werden. Die Teillinien führen etwa zu parallel arbeitenden Bearbeitungsstationen. Nach der Bearbeitung in den parallel angeordneten Stationen ermöglicht eine Zusammenführ-Vorrichtung das Zusammenführen der Gefässe von mindestens zwei Teillinien. Eine solche Parallel-Bearbeitung wäre bei Anlagen mit Kettenförderern unverhältnismässig aufwendig. Im Rahmen des flexiblen Anlagenaufbaus ist es gegebenenfalls zweckmässig die Öfen verschiedener Bearbeitungsschritte zusammenzunehmen um den Wärmeverlust zu minimieren.

Die Beschickung der Öfen erfolgt vorzugsweise mittels Bandförderern, die die Dosen jeweils im Ofen für die Trocknung in einem Staubereich zurückhalten. Indem die Dosen auf den Paletten stehend in den Öfen aufgenommen werden können, wird die Trocknung wesentlich vereinfacht. Insbesondere für das Trocknen des Innenlackes werden die Ofenschalen überflüssig und beim Umstellen der Anlage auf eine andere Dosengrösse, müssen diese auch nicht mehr ausgewechselt werden. Bei der Trocknung der Aussenbeschichtung führt gemäss dem Stande der Technik eine Kette durch den Ofen. Durch diese Kette wird mehr Wärmeenergie aus dem Ofen abgeführt als durch zweckmässig dimensionierte Paletten.

Die erfindungsgemässen Anlagen sind nicht nur im Aufbau flexibel sondern ermöglichen auch mit einem minimalen Umstellungsaufwand, die Bearbeitung vieler verschieden grosser und geformter Dosen, bzw. Gefässe. Durch die Wahl einer einheitlichen Verbindung zwischen Palette und Dosenboden und indem der Paletten-Querschnitt vorzugsweise so gewählt wird, dass er etwas grösser ist als der Querschnittsbereich zumindest zweier gängiger Dosentypen, kann die gleiche Palette für verschiedene Dosentypen verwendet werden. Die Dosenhöhe spielt keine Rolle, was gegenüber der Halterung mit Dornen ein weiterer Vorteil ist.

Die Paletten werden im Anfangsbereich der Anlage mit den Dosen verbunden, im Endbereich von diesen getrennt und mittels einer Paletten-Rückführung wieder zum Anfangsbereich geführt. Im Rahmen der Rückführung wird vorzugsweise eine Palettenreinigung und insbesondere ein Palettenlager vorgesehen. Die gleiche Anlage kann problemlos mit verschiedenen Palettentypen, beispielsweise Palettentypen mit verschiedenen Paletten-Querschnitten, betrieben werden. Dazu wird das Palettenlager vorzugsweise so ausgebildet, dass es alle Paletten jedes Typs je in getrennten Bereichen lagern und/oder bei Bedarf zum Anlagen-Anfangsbereich fördern kann. Die erfindungsgemässen Anlagen sind auch nicht auf Dosen aus bestimmtem Material eingeschränkt. Als Dosenmaterial kommen Metalle, sowohl magnetisierbare wie auch nicht magnetisierbare, und auch nicht Metalle, insbesondere Kunststoffe in Frage. Die breite Verwendungsmöglichkeit der Anlagen oder zumindest von Anlageteilen resultiert aus der Fördervorrichtung die Magnetförderer zusammen mit magnetisierbaren Paletten umfasst.

Die Zeichnungen erläutern die Erfindung anhand schematisch dargestellter Beispiele.
- Fig. 1:: Anlage zur Bearbeitung von Aluminium Dosen nach dem Stande der Technik
- Fig. 2:: Ablaufschema einer erfindungsgemässen Anlage
- Fig. 3:: Schnitt durch eine Palette mit Aluminiumdose und Draufsicht auf eine Palette
- Fig. 4:: Schnitt durch eine Palette mit Tube und Draufsicht auf eine Palette
- Fig. 5:: Perspektivische Ansicht einer Innenlack-Bearbeitungsstation
- Fig. 6:: Draufsicht auf eine Ausführungsform einer magnetisierbaren Palette
- Fig. 7-9:: Querschnitte von Paletten

Die Figur 2 zeigt ein Ablaufschema einer erfindungsgemässen Anlage zur Herstellung von Aluminium Dosen. Als erste Bearbeitungsstation ist eine Presse 30 vorgesehen. Die rohen Dosen bestehen aus einem zylindrischen Mantel, der am einen Ende eine Befüllöffnung und am anderen Ende eine Abschlussfläche aufweist. Von der Abschlussfläche steht mindestens ein, im wesentlichen in Achsrichtung vom Gefäss nach aussen führender, vorzugsweise zentrisch angeordneter, Anschlussteil vor. Anschliessend werden die Dosen in einer Rohbearbeitungsstation 31' auf die gewünschte Länge zugeschnitten, gegebenenfalls gebürstet und mit einer Palette versehen. Die Station 31' umfasst somit eine Palettisierungsvorrichtung, die die Anschlussfläche der Dose mit der Verbindungsfläche der Palette verbindet, vorzugsweise indem der Anschlussteil in eine Öffnung der Palette eingeführt und insbesondere von einer Nietvorrichtung fest mit der Palette verbunden wird.

Gegebenenfalls können mit Paletten versehene Dosen in einen Vorspeicher 45 für Kleinserien eingeführt werden. Von der Rohbearbeitungsstation 31' führt ein magnetischer Bandförderer, der gegebenenfalls auch vom Vorspeicher beschickbar ist, durch eine Reinigungsstation 33. Die Dosen werden mittels der Paletten auf dem Förderer durch verschiedene Reinigungsbereiche wie Entfettungs- und Spühlbereiche geführt, wobei der Förderer so angeordnet ist, dass die Dosen vor dem Austritt aus jedem Reinigungsbereich mit der Gefässöffnung nach unten gehalten sind, um das möglichst vollständige Austreten von Reinigungsflüssigkeit zu gewährleisten und beim Eintritt in, zumindest vor dem Austritt aus gegebenenfalls vorgesehenen Bädern mit der Öffnung nach oben gehalten sind, um das vollständige Befüllen des Doseninneren mit Reinigungsflüssigkeit zu ermöglichen.

An den Reinigungsbereich schliesst ein Bandförderer mit einer Staustrecke 46 an, die zeitweise nicht weiterführbare Gefässe zurückhält. Die Paletten werden vorzugsweise mit einer betätigbaren Rückhaltevorrichtung, insbesondere einer Schranke an der die Paletten der direkt an die Rückhaltevorrichtung angrenzenden Gefässe anstossen, zurückgehalten. Die Förderfläche bewegt sich gleitend unter den Anschlussflächen der gestauten Paletten durch.

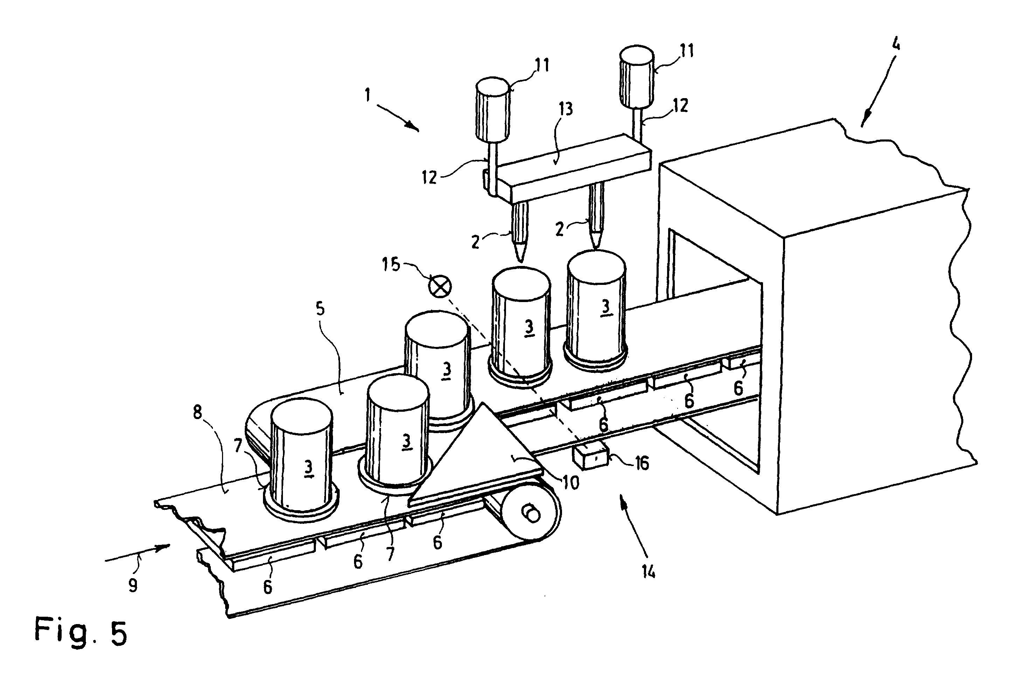

Aus dem Staubereich werden die Dosen bei Bereitschaft der anschliessenden Innenlack-Vorrichtung 34 mittels eines vorzugsweise magnetischen Zuführförderers, insbesondere eines Drehtellers zugeführt und von diesem etwa in horizontaler Ausrichtung in drehbare, die Dosen beim Einspritzen des Lackes drehende, Halterungen aufgenommen. Bei erfindungsgemässen Anlagen können die Dosen aber ebenso einfach in vertikaler Ausrichtung übergeben und lackiert werden. Auf das Drehen beim Lackieren könnte dann gegebenenfalls verzichtet werden. Weil die Dosenöffnung bei der Förderung mit Paletten frei zugänglich ist, müssen die Dosen nicht unbedingt in eine Halterung der Innenlack-Vorrichtung eingeführt werden, sondern die Lackierung kann direkt in den mit ihren Paletten auf einer Förderfläche stehenden Dosen erfolgen, wie dies in Fig. 5 dargestellt ist. Die Förderfläche kann während des Lackierens bewegt oder angehalten sein. Die mindestens eine Lackierdüse muss den Dosen zuführbar angeordnet sein. Die erfindungsgemässe Förderung der Dosen auf magnetisierbaren Paletten hat den Vorteil, dass sie sowohl mit Bearbeitungsstationen von Anlagen mit Förderketten als auch mit auf das neue Förderkonzept ausgerichteten Bearbeitungsstationen, einsetzbar ist. Dies bedeutet, dass etwa bei einer bestehenden Anlage die Förderkette entfernt und die Förderung zwischen den alten Bearbeitungsstationen durch die erfindungsgemässe Förderung mit Paletten und Magnetförderern ersetzt werden kann. Es versteht sich von selbst, dass Anlagen mit Bearbeitungsstationen die auf das neue Förderkonzept ausgelegt sind, noch vorteilhafter ausgebildet werden können.

Von der Innenlack-Vorrichtung 34 gelangen die Dosen vorzugsweise auf einem Bandförderer in einen Innenlack-Ofen 35', in dem sie etwa für die Trocknung in einem Staubereich auf dem Bandförderer zurückhaltbar sind. Um Wärmeverluste und den Austritt von gegebenenfalls freiwerdenden Gasen zu vermindern, kann der Ofen 35' am Anfang der Befüllung auf der Austrittsseite und am Ende der Befüllung auch auf der Eintrittsseite verschlossen werden. Nach der Trocknung wird die Austrittsseite geöffnet, so dass die Dosen aus dem Staubereich im Ofen 35' wieder auf dem Bandförderer weitergeführt werden. Um das Freisetzen von unerwünschten Gasen zu vermindern, wird während des Dosenautritts im Ofen 35' Gas abgesogen und einer Reinigung zugeführt. Die in den Ofen 35' einstömende Frischluft wird vorzugsweise so über die austretenden Dosen geführt, dass sie von diesen vorgewärmt in den Ofen 35' gelangt. Nachdem alle Dosen aus dem Ofen 35' ausgetreten sind, wird die Austrittsöffnung wieder verschlossen und die Eintrittsöffnung geöffnet, um einen nächsten Trocknungszyklus durchzuführen. Bei dieser diskontinuierlichen Trocknung muss auch zwischen der InnenlackVorrichtung 34 und dem Ofen 35' ein Stauraum zumindest von der Grösse des Ofen-Stauraumes vorgesehen werden.

Um einen einfachen Aufbau zu erzielen und insbesondere alle Dosen exakt gleich zu trocknen, ist es vorzugsweise zweckmässig, kontinuierlich arbeitende Durchlauföfen zu verwenden. Durch diese Öfen führt ein Förderband, das vorzugsweise eine Standardbreite hat und von einer Staubeschickung mit, der Bandbreite entsprechenden Dosenreihen beschickt wird. Die Bandgeschwindigkeit wird so gewählt, dass der maximale Dosenzufluss durch den Ofen weitergeführt werden kann. Um die nötige Heizzeit bzw. Trocknung zu erzielen, muss die Länge des Ofens der Bandgeschwindigkeit entsprechend gewählt werden. Nach dem Ofen können die parallel laufenden Dosenreihen, insbesondere etwa beim Austritt aus einem Staubereich wieder vereinzelt werden.

Weil die Dosen für die Innenlackierung nicht mehr an ihrer Aussenfläche gehalten werden müssen, sind auch Anlagen zweckmässig, bei denen die Aussenbeschichtung vor der Innenbeschichtung erfolgt. Bei solchen Anlagen müssen die Dosen nach der Innenlackierung nicht mehr von innen gehalten werden, was die Beanspruchung der frischen Innenlack-Schicht vermindert. Um auf eine Halterung der Dosen von Innen im wesentlichen zu verzichten, könnten die Dosen bei der Aussenbehandlung etwa an der Palette und lediglich in einem kleinen Innenbereich bei der Dosenöffnung gehalten werden.

Bei den erfindungsgemässen Anlagen ist es mit einem kleinen Aufwand möglich, die nach jeder der drei Aussenbeschichtungen durchzuführende Trocknung in einer gemeinsamen Ofenanordnung 47 durchzuführen. Von einer Grundierungseinrichtung 39' gelangen die Dosen vorzugsweise auf einem Förderband in einen ersten Trocknungsbereich 47a der Ofenanordnung 47 und von dort zu einer Druckeinrichtung 40'. Von der Druckeinrichtung 40' gelangen die Dosen über einen zweiten Trocknungsbereich.47b zu einer Überlackeinrichtung 41' und von dieser durch einen dritten Trocknungsbereich 47c zu einer Entpalettisierungs-Vorrichtung 48. Weil die Aussenbeschichtungen vorzugsweise an den horizontal gehaltenen Dosen erfolgt, ist es gegebenenfalls zur Vereinfachung der Übergabe auf die und von den durch die Trocknungsbereiche führenden Banförderer zweckmässige, diese zumindest in den Übergabebereichen als Magnetförderer mit im wesentlichen vertikalen Förderflächen auszubilden. Die Trocknung erfolgt kontinuierlich in beidseits offenen Tunnelöfen oder aber vozugsweise diskontinuierlich, wie anhand des Innenlack-Ofens 35' beschrieben.

Auf das Aufsetzen der Dosen auf Haltedorne der Aussenbeschichtungs-Vorrichtungen 39', 40', 41' kann gegebenenfalls verzichtet werden, indem die Dosen bei der Beschichtung an der Palette und lediglich am Innenrand der Dosenöffnung gehalten werden.

Die Entpalettisierungs-Vorrichtung 48 umfasst ein Trennmittel zum Trennen der Palette von der Dose, insbesondere zum Entfernen zumindest eines Teiles eines von der Dosen-Anschlussfläche vorstehenden, mit der Palette verbundenen Anschlussteiles. Zum Trennen von Nietverbindungen ist etwa eine Fräsvorrichtung vorgesehen, die von der der Dose abgewandten Seite der Palette den Nietkopf abfräst. Mit einer an der Palette anstehenden Anschlagseinrichtung kann verhindert werden, dass etwas von der Palette abgefräst wird. Nach dem Fräsen wird eine Separiervorrichtung die beiden Teile je einer Weiterführung zuleiten.

Die Dosen ohne Paletten werden in einer anschliessenden Endformungsvorrichtung 43 weiterbehandelt, insbesondere indem der Dosenboden in die gewünschte Form gepresst und gegebenenfalls das Anschlussteil vollständig entfernt wird Bei der Dosenöffnung wird ein Hals zum Aufnehmen eines Ventiles ausgebildet. Bei Anlagen, die die Bodenformung bereits bei der Rohbearbeitung durchführen, müssen Paletten eingesetzt werden, die der Bodenform angepasst sind.

Die Paletten gelangen über eine Paletten-Rückführung 49, vorzugsweise über einen zumindest teilweise magnetischen Bandförderer, von der Entpalettisierstation 48 vorzugsweise über eine Palettenreinigungs-Vorrichtung 50 und/oder eine Palettenlager-Vorrichtung 51 zur Palettisierstation 31'. Nebst den gerade in der Rückführung befindlichen Paletten müssen wenigstens so viele Paletten vorhanden sein, wie Dosen in Bearbeitung sein können.

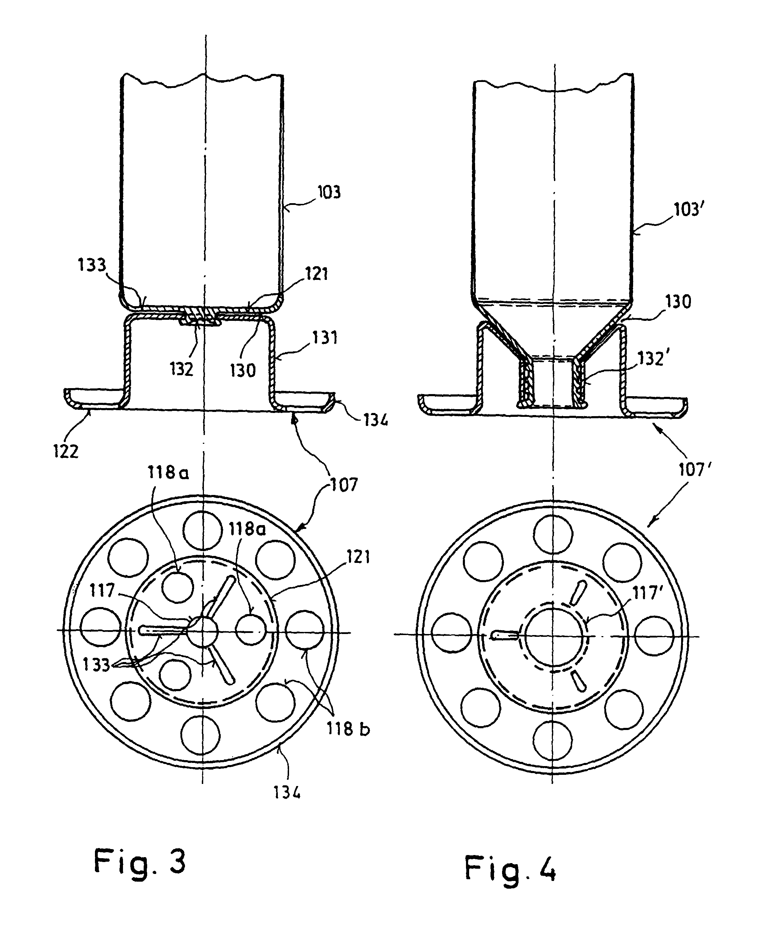

Fig. 3 zeigt eine bevorzugte Palette 107 für eine Dose 103, deren Bodenformung erst nach der Entpalettisierung durchgeführt wird. Die Palette 107 hat eine Paletten-Anschlussfläche 122 zum Anlegen an eine Förderfläche und eine Verbindungsfläche 121 mit wenigstens einer Verbindungseinrichtung zum Verbinden der Palette 107 mit einer Dosen-Bodenfläche 130 umfasst, wobei die Paletten-Anschlussfläche 122 und die Verbindungsfläche 121 im wesentlichen parallel zueinander angeordnet sind. In der bevorzugten Ausführungsform ist die Paletten-Anschlussfläche 122 ringförmig und die Verbindungsfläche 121 scheibenförmig ausgebildet. Die beiden Flächen 121 und 122 werden von einer vorzugsweise zylindrischen Distanzhaltefläche 131 im gewünschten Abstand voneinander gehalten. Die Distanzhaltefläche 131 führt vorzugsweise vom Innenrand der Paletten-Anschlussfläche 122 zum Aussenrand der Verbindungsfläche 121.

Die Verbindungseinrichtung umfasst wenigstens eine, vorzugsweise eine zentrale, Anschlussöffnung 117 an der ein Anschlussteil 132 der Dosenfläche 130 gegebenenfalls reibschlüssig, vorzugsweise aber formschlüssig; insbesondere durch einen Nietvorgang, festsetzbar ist. Durch den Nietvorgang wird das freie Ende des Anschlussteiles 132 auf der der Dose abgelegenen Seite der Verbindungsfläche 121 seitlich über den Anschlussöffnungsrand hinaus verformt. Damit die Nietverbindung auch nach temperaturbedingten Materialverformungen verdrehfest ist, wird vorzugsweise eine Federspannung aufgebaut, indem die Verbindungsfläche 121 und die Dosenfläche 130 von Distanzelementen 133 im Bereich des Anschlussteils 132 etwas beabstandet wird. Es sind vorzugsweise mindestens drei symmetrisch um die Anschlussöffnung 117 angeordnete Rippen vorgesehen. Beim Nieten wird die Distanz zwischen Palette 107 und Dose 103 durch eine elastische Verformung des Gefässbodens und/oder der Verbindungsfläche 121 der Palette 107 etwas verkleinert. Die verbleibende Distanz ist so gewählt, dass die Dosenfläche 130 spülbar bleibt.

Am Aussenrand der Paletten-Anschlussfläche 122 ist eine im wesentlichen senkrecht zur Anschlussfläche 122 ausgebildete, sich von der Anschlussfläche 122 gegen die Verbindungsfläche 121 erstreckende seitliche Kontaktfläche 134 vorgesehen. Mit dieser Kontaktfläche 134 treten die Paletten mit Leitelementen bzw. untereinander in Führungs- bzw. Distanzhaltekontakt.

Die Paletten sind zum Aufnehmen von Dosen vorzugsweise so dimensioniert, dass die Dosen-Querschnitte bzw. -Durchmesser zwischen den Querschnitten bzw. Durchmessern der Distanzhaltefläche 131 und der Kontaktfläche 134 liegen. Dadurch wird gewährleistet,' dass beim Bedrucken die Druckwalze über den unteren Dosenrand hinausstehen kann und die Dosen sich aber nicht gegenseitig berühren können. Die Dosen berührungsfrei zu fördern, ist insbesondere direkt nach der Aussenbehandlung wichtig, weil dadurch eine Beschädigung der noch frischen Beschichtung verhindert werden kann. Um mit drei verschieden grossen Paletten alle gängigen Dosen aufnehmen zu können, werden etwa für die folgenden Dosendurchmesser-Bereiche 22-35mm, 35-53mm und 53-66mm Paletten dimensioniert.

Durchtrittsöffnungen 118a in der Verbindungsfläche 121 verbessern die Reinigungsfähigkeit der Dosenfläche 130 und reduzieren zusammen mit den Öffnungen 118b in der Anschlussfläche 122 das Paletten-Gewicht und somit die von den Paletten aus den Öfen ausgetragene Wärmemenge. Um die Paletten kostengünstig herzustellen, werden sie aus magnetisierbarem Stahl ausgestanzt und vorzugsweise durch Tiefziehen in die gewünschte Form gebracht.

Fig. 4 zeigt eine analog zur Palette 107 aufgebaute Palette 107' für Tuben 103'. Als Anschlussteil wird vorzugsweise das Gewindeteil 132' verwendet. In der dargestellten Ausführungsform steht ein Wulst des freien Endes des Gewindeteils 132' aufgrund eines Pressvorganges nach aussen über die Anschlussöffnung 117' vor, so dass die Tube 103' fest mit der Palette 107' verbunden ist. Beim Trennen von Tube und Palette muss der Wulst entfernt werden. Damit keine nachträgliche Bearbeitung am Gewindeteil 132' nötig wird, ist in einer bevorzugten Ausführung der Palette 107' mindestens eine, insbesondere federnde, Einrastvorrichtung vorgesehen. Um ein einfaches Einrasten dieser Vorrichtung an der Tube 103' zu gewährleisten, wird etwa mit dem Schneiden des Gewindes am Teil 132', vorzugsweise am tubenseitigen Ende des Gewindeteils 132', eine Nut angebracht. Die mindestens eine Einrastvorrichtung, die im aufgepressten Zustand über das Gewinde geführt werden kann, rastet im Haltezustand so in der Nut ein, dass die Tube auf der Palette gehalten wird. Um eine gute Ausrichtung der Tube 103' relativ zur Palette 107' zu gewährleisten, umfasst die Palette Kontaktbereiche, vorzugsweise drei, an denen entsprechende Bereiche der Tubenaussenfläche anliegen, wenn die Tube von der Einrastvorrichtung an der Palette gehalten wird. Die Einrastvorrichtung umfasst vorzugsweise drei Federzungen.

Fig. 5 zeigt schematisch eine Innenlack-Bearbeitungsstation mit einer Sprühapparatur 1 mit Sprühdüsen 2 zum Aufbringen eines gegen Korrosion schützenden Überzuges im Inneren von Dosen 3 aus einem nicht-magnetischen Material, wie Aluminium. Anschliessend an die Besprühung mittels der Düsen 2 gelangen die Dosen 3 in einen Trockenraum 4, der z.B. als Tunnelofen ausgebildet ist. Es kann dabei die Ausbildung entweder so getroffen sein, dass die Dosen am anderen, nicht gezeigten Ende des Trockenraumes ausgetragen werden, oder sie werden vom Untertrum eines Gurtförderers 5 in noch zu beschreibender Weise wieder nach links (bezogen auf Fig. 5) herausgeführt. In diesem Falle ware es möglich, auch an der Seite des Untertrums des Gurtförderers 5 Bearbeitungseinrichtungen anzuordnen, wie eine weitere Sprüheinrichtung.

Um die Dosen 3 für die Bearbeitung sicher auf ihrem Platze auf dem Gurt 5 zu halten, ist der Gurtförderer 5 als an sich bekannter Magnetgurtförderer ausgebildet, indem entweder in den Gurt 5 kleine Permanentmagnete eingearbeitet sind und mit ihm umlaufen oder an der Unterseits des Gurtes 5 stationäre Magnetplatten 6 angeordnet sind, welch letztere gegebenenfalls mit daran angeordneten Elektromagneten zusammenwirken oder ebenfalls permanentmagnetisch sind.

Um nun die nicht-magnetischen Dosen 3 fest am Gurt 5 zu halten, auch wenn dieser beispielsweise aufwärts geführt werden muss oder wenn die Dosen 3 auch an seinem Untertrum verbleiben sollen, sind am Gurt magnetisierbare Paletten 7 verteilt. Diese Paletten wirken somit mit den Magnetplatten 6 zusammen, wobei die letzteren auch nahe am Untertrum des Gurtes 5 anzuordnen sind, wenn dieses zur Mitnahme der Dosen ausgebildet werden soll. Die Paletten 7 sind auf dem Gurt verschiebbar, weil dies die Manipulation erleichtert, wie nachstehend noch ersichtlich wird.

So kann ein parallel zum Gurtförderer 5 oder ein unter einem Winkel zum Gurtförderer 5 angeordneter zweiter Gurtförderer 8 vorgesehen sein, der prinzipiell ebenfalls als Magnetgurtförderer ausgebildet ist. Um die Dosen 3 vom Gurtförderer 8 auf den Gurtförderer 5 zu bringen, sind schräg zu Laufrichtung (Pfeil 9) des Gurtes 8 gelegene Ablenkflächen 10 vorgesehen, die vorzugsweise nicht an den Dosen 3 angreifen (um deren Aussenfläche zu schonen), sondern an den verschiebbaren Paletten 7.

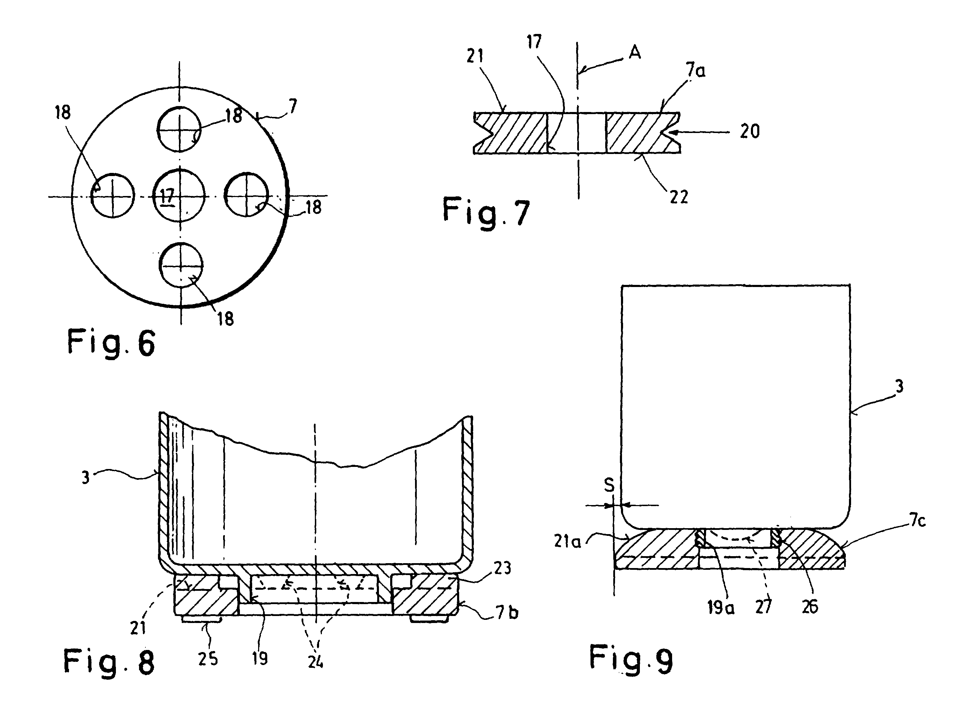

Während die Darstellung der Fig. 5 nur jeweils eine Dose 3 hinter der anderen zeigt, können die Dosen 3 im Rahmen der Erfindung ohne weiteres auch paarweise (oder in noch grösserer Anzahl) am jeweiligen Gurt 5 bzw. 8 angeordnet werden, um so die Produktivität zu erhöhen. In diesem Falle sind natürlich die Bearbeitungseinrichtungen jeweils mehrfach nebeneinander anzuordnen. Auch können dann die Ablenkflächen statt bloss mit einer einzigen Schräge auch pfeilförmig, mit einer mittig am Gurt 8 liegenden Spitze ausgebildet werden, um die Dosen 3 jeweils nach links und rechts (bezogen auf die Laufrichtung 9) abzulenken. Ferner ist es nicht erforderlich, gleichartige Gurte 5 bzw. 8 als Fördermittel vorzusehen; beispielsweise kann einem Gurt auch ein Drehteller seitlich zugeordnet sein, auf den die jeweilige Dose hin verschoben wird, um auf dem Drehteller eine Umdrehnung, etwa zur Lackierung, auszuführen, Um für diesen Vorgang Zeit zu geben, ohne den jeweiligen Gurtförderer jeweils stillsetzen und so intermittierend betreiben zu müssen, können die Ablenkflächen 10 statt stationär (wie in Fig. 5 dargestellt und beispielsweise am nicht gezeigten Rahmen das Gurtförderers 8 befestigt) angeordnet zu sein, auch beispielsweise gesteuert jeweils in die Bahn des Gurtförderers, z.B. mittels eines Zahnstangentriebes oder mittels eines fluidischen Aggregates, wie eines pneumatischen Zylinders, hineingefahren werden, so dass dann auch mehrere hintereinandergeschaltete Ablenkflächen abwechselnd in die Bahn 9 des Gurtförderers 8 ragen oder aus ihr herausgezogen werden, um die Dosen 3 zu hintereinander gelegenen Einrichtungen, wie Drehtellern, zu bewegen. Von solchen Drehtellern können dann die Dosen entweder durch Manipulatoren entfernt werden, oder es sind auch dort auf den Drehteller zu verschiebbare Ablenkflächen vorgesehen, die die Paletten 7 samt Dosen 3 wieder auf den (oder einen anderen) Gurt bringen. Eine weitere Möglichkeit besteht darin, die Paletten 7 selbst als Drehteller auszubilden und sie beispielsweise an ihrem Umfange anzutreiben, wie noch später an Hand der Fig. 7 erläutert wird.

Es wurde oben erwähnt, dass die Ablenkflächen 10 taktweise entsprechend der Ankunft von Dosen 3 am jeweiligen Orte verschoben werden können. Hiezu ist gegebenenfalls eine genaue Steuerung einsetzbar, wovon ein Ausführungsbeispiel in Fig. 5 dargestellt ist. Dasselbe gilt gegebenenfalls auch für die Betätigung der Bearbeitungseinrichtungen, wie der Sprüheinrichtung 1. Diese zeigt zwei Zylinderaggregate 11 auf, die mittels Pratzen 12 an einem Träger 13 angreifen. Die Zufuhr von Sprühflüssigkeit, wie Lack, zu den Düsen erfolgt dann über mindestens einen am Träger 13 angeschlossenen, nicht dargestellten Schlauch oder je einen Schlauch für jede Düse 2.

Um das Vorhandensein einer Dose unter der jeweiligen Düse 2 (es kann eine einzige oder eine ganze Batterie solcher Düsen vorgesehen sein) festzusteilen, ist ein Sensor 14 vorgesehen, der an sich beliebig ausgebildet sein kann. In der Darstellung der Fig. 5 ist er als Lichtschranke mit einer Lichtquelle 15 und einem gegenüberliegenden lichtelektrischen Wandler 16 ausgebildet, die aber auch an derselben Seite des Gurtförderers 5 angeordnet sein können, wobei der Wandler 16 beispielsweise das von den Dosen 3 reflektierte Licht empfängt. Die letztere Anordnung ergibt wegen des runden Umfanges derselben zu einem ganz bestimmten Zeitpunkte ein besonders deutliches Signal.

Anderseits ist man hinsichtlich der Auswahl der Sensoren gar nicht an opto-elektrische oder andere Strahlungssensoren gebunden, da das Dosenmaterial im allgemeinen auch zum Ansprechen eines induktiven oder kapazitiven Sensors bewirken würde. In jedem Falle aber dient das Ausgangssignal des jeweiligen Sensors 14 bzw. des Wandlers 16 zur Ansteuerung entsprechender Bewegungsaggregate, wie der Zylinder 11.

Die Verwendung von magnetisierbaren Paletten 7 bedeutet im allgemeinen die Anwendung eines relativ schweren Materials.

Deshalb ist es bevorzugt, wenn, wie Fig. 6 zeigt, die jeweilige, für die gedachten Zwecke vorzugsweise kreisrunde, Palette 7 wenigstens eine ihre Dicke durchsetzende und die beiden Hauptflächen miteinander verbindende Öffnung aufweist, die einerseits das Gewicht verringert, anderseits aber auch zusätzlichen Zwecken dienen mag, wie noch erläutert wird. Im Ausführungsbeispiel der Fig. 6 sind neben einer mittigen Öffnung 17 auch noch weitere Öffnungen 18 vorgesehen. Diese Öffnungen 17, 18 können einerseits als Vertiefungen zur Aufnahme von Vorsprüngen der Dosen, wie etwa einen unteren Dosenrand 19 (Fig. 8), d.h. als Halteeinrichtung, dienen, doch ist natürlich auch eine umgekehrte Anordnung möglich, bei der die Palette einen in eine Vertiefung der Dose 3 eindringenden oder ihren Rand umgebenden Vorsprung aufweist. Diese letztere Variante wird jedoch nicht bevorzugt sein, weil es im allgemeinen zur vollständigen Bearbeitung der Dosenoberfläche günstiger ist, wenn diese frei zugänglich ist. Dies ist auch der Grund für die später besprochenen besonderen Ausbildungen nach den Fig. 8 und 5.

Falls, wie oben erwähnt, ein Antrieb der Paletten erwünscht ist, kann deren Querschnittsform entsprechend Fig. 7 ausgebildet sein, wo eine Palette 7a mit einer Keilnut 20 dargestellt ist. Mit dieser Keilnut 20 können beispielsweise zwei entsprechend ausgebildete und etwa in einem Winkel relativ zur zentralen Achse A am Umfange angeordnete Reibscheiben zusammenwirken. Theoretisch wäre zwar auch ein Riementrieb denkbar, doch müsste dieser Riemen dann um den Umfang der jeweiligen Palette 7a gelegt werden. Es versteht sich aber, dass für den Drehantrieb der Paletten an sich auch andere Ausbildungen ihrer Umfangsfläche, wie mehr oder minder glatte oder gezähnte Umfangsflächen (für den Eingriff eines Zahnrades), möglich sind. Ferner könnte die mittige Öffnung 17 auch zum Hindurchstecken einer Antriebswelle ausgenützt werden, doch wird dies im allgemeinen nicht praktikabel sein. Beim Ausführungsbeispiel nach Fig. 7 sei übrigens erwähnt, dass die mittige Öffnung 17 derart gross bemessen sein kann, dass die Palette 7a (wie auch die später besprochenen Paletten 7b und 7c) ringförmig ist.

Ein anderer Zweck einer solchen Keilnut 20 kann es sein, eine Ablenkfläche 10 (vgl. Fig. 5) an ihr angreifen zu lassen. Diese Ablenkflächen sollten zweckmässig eine Dicke besitzen, die maximal der Dicke der Palette 7a entspricht, um so mit Sicherheit keine Kratzspuren an den Dosenflächen zu hinterlassen. Selbstverständlich können aber die Ablenkflächen selbst in der Höhe des jeweiligen Stückgutes angeordnet werden, wenn dieses nicht so empfindliche Flächen besitzt, wie dies bei den dargestellten Dosen 3 der Fall ist, in welchem Falle die Paletten gegebenenfalls auch mit dem jeweiligen Förderer fest verbunden sein könnten.

Aus Fig. 7 ist auch die flache Ausbildung der Palette 7a ersichtlich, die somit eine der (hier oben angenommene) Dose zugekehrte Verbindungs- bzw. Hauptfläche 21 und eine dem Magnetförderer (5 bzw. 8) zugekehrte Anschluss- bzw. Hauptfläche 22 aufweisen wird.

Wie besonders Fig. 8 zeigt, können aus der Ebene der oberen Hauptfläche 21 auch Vorsprünge 23 als Abstandhalter vorragen, die zwischeneinander strichliert gezeigte Belüftungskanäle freilassen, um so etwa im Tunnelofen 4 die warme Luft besser an die Unterseite gelangen zu lassen.

Wie erwähnt, wird die freie Zugänglichkeit der Umfangsfläche der jeweiligen Dose 3 im allgemeinen wichtig sein. Gegebenenfalls hat die Palette 7c deshalb einen geringeren Umfang als die Dose 3, wie dies aus Fig. 8 ersichtlich ist.

Eine andere Lösung für eine Palette 7c zeigt die Fig. 9. Um die Standfestigkeit der (relativ leichten) Dose 3 auf der Palette zu erhöhen, kann ihr unterer Rand 19a ein Aussengewinde besitzen, das in ein Innengewinde 26 der Palette 7c eingeschraubt ist. Die Zugänglichkeit der Umfangsfläche der Dose 3 ist bei diesem Ausführungsbeispiel dadurch gesichert, dass die Palette 7c eine gewölbte obere Hauptfläche 21a besitzt, wobei sie aber um einen Abstand s über den Umfang der Dose vorragt, was die Standfestigkeit verbessert. Dabei kann die Wölbung der Fläche 21a auch durch Wellungen (vgl. den strichlierten Konkavabschnitt 27) mit Abstandhaltern versehen sein, um den Luftzutritt zu verbessern.

Im Rahmen der Erfindung sind zahlreiche Abwandlungen möglich; beispielsweise können die Öffnungen 17, 18 zum Einführen von Bearbeitungseinrichtungen dienen und ausgebildet bzw. angeordnet sein. Obwohl ein Magnetgurtförderer bevorzugt ist, sind, wie schon erwähnt auch andere mit Magneten zusammenwirkende Förderer denkbar. Ferner könnte eine Palette zur Aufnahme von mehreren Stückgütern 3, beispielsweise eines Paares von Dosen 3; ausgebildet werden, obwohl dies im allgemeinen nicht bevorzugt sein wird.

## Patentansprüche

1. Anlage zum Bearbeiten von Gefässen, insbesondere aus nicht magnetisierbarem Material wie Aluminium, mit Bearbeitungsstationen zum Reinigen (33) und/oder Beschichten (34, 39-41, 39'-41') und/oder Trocknen (35, 47) und mit einer, zumindest einen Magnetförderer (6-8) umfassenden, Fördervorrichtung zum Fördern der Gefässe (3,103,103') zu den und/oder in den Bearbeitungsstationen, **dadurch gekennzeichnet, dass** die Fördervorrichtung für jedes zu fördernde Gefäss (3,103,103') eine mit dem Gefäss (3,103,103') verbindbare, zumindest teilweise aus spontan unmagnetischem aber magnetisierbarem Material hergestellte Palette (7,107,107') umfasst, wobei die Palette (7,107,107') mit einer Paletten-Anschlussfläche (122) an einer bewegbaren Förderfläche (8) des Magnetförderers (6,8) anliegt und vom Magnetförderer (6,8) mittels magnetischer Kräfte an der Förderfläche (8), relativ zu dieser verschiebbar, gehalten wird.

2. Anlage nach Anspruch 1, **dadurch gekennzeichnet, dass** mindestens eines der folgenden Merkmale vorgesehen ist
a) die Fördervorrichtung (6-8,107,107') umfasst mindestens einen vorzugsweise magnetischen Bandförderer (46), der vor einer Bearbeitungsstation (34) eine Staustrecke bildet und dabei zeitweise nicht weiterführbare Gefässe (3,103,103') zurückhält, wobei die Gefässe (3,103,103') vorzugsweise mit einer betätigbaren Rückhaltevorrichtung, insbesondere einer Schranke an der die Paletten (7,107,107') der direkt an die Rückhaltevorrichtung angrenzenden Gefässe (3,103,103') anstossen, auf der Staustrecke gehalten werden, während die Förderfläche (8) gleitend unter den Anschlussflächen (122) der Paletten (7,107,107') durchläuft;
b) die Fördervorrichtung (6-8,107,107') umfasst Leitelemente (10), welche die von der Förderfläche (8) bewegten Gefässe (3,103,103'), insbesondere durch führende Berührungskontakte mit Paletten (7,107,107'), entlang gewünschter Wege führbar machen, wobei die Leitelemente (10) gegebenenfalls von einer Betätigungseinrichtung bewegbar sind,
c) die Fördervorrichtung (6-8,107,107') umfasst mindestens eine Trennvorrichtung zum Aufteilen der zugeförderten Gefässe auf mindestens zwei Teillinien-Bandförderer, die je zu einer Bearbeitungsstation führen;
d) die Fördervorrichtung umfasst mindestens eine Zusammenführ-Vorrichtung zum Zusammenführen der Gefässe von mindestens zwei Teillinien-Bandförderern und;
e) mindestens zwei Bearbeitungsstationen für die gleiche Bearbeitung sind im Bearbeitungsablauf parallel angeordnet.

3. Anlage nach Anspruch 1 oder 2, **dadurch gekennzeichnet, dass** zur Übergabe von Gefässen (3,103,103') an, bzw. zum Abnehmen von Gefässen (3,103,103') von Bearbeitungsstationen mit Halteelementen, wie etwa Dorne für Aussenbearbeitungen oder Hülsen für Innenbearbeitungen, ein Magnetförderer (6,8) vorgesehen ist, dessen Förderfläche (8) im Übergabebereich im wesentlichen vertikal zur Achse der Halteelemente steht, so dass die im wesentlichen senkrecht zur Paletten-Anschlussfläche (122) stehende Gefässachse parallel zur Achse der Halteelemente ist und das Gefäss (3,103,103') durch eine, mechanisch, mit Druckluft oder aber mit auf die Palette wirkenden elekromagnetischen Betätigungselementen durchführbare, Verschiebung in Richtung der Gefässachse dem Halteelement zuführbar, bzw. von diesem abnehmbar ist.

4. Anlage nach einem der Ansprüche 1 bis 3, **dadurch gekennzeichnet, dass** zum Übergeben von Gefässen (3,103,103') an eine Bearbeitungsstation mindestens ein magnetischer Drehteller und gegebenenfalls feste oder bewegte mit den Paletten in Führungskontakt tretende Führungen (10) angeordnet sind.

5. Anlage nach einem der Ansprüche 1 bis 4, **dadurch gekennzeichnet, dass** mindestens eine Bearbeitungsstation zum Trocknen (35,47) von gereinigten oder beschichteten Gefässen als Ofen mit einem durchführenden vorzugsweise magnetischen Ofen-Bandförderer (5) ausgebildet ist, wobei der Bandförderer (5) zumindest im Ofen (35,47) einen Staubereich umfasst, in dem die Gefässe (3,103,103') während der nötigen Trocknungszeit zurückhaltbar sind und gegebenenfalls mindestens eines der folgenden Merkmale vorgesehen ist
a) der Ofen (35,47) umfasst zumindest im Austrittsbereich, vorzugsweise aber auch im Eintrittsbereich eine Verschlussvorrichtung, welche die Paletten (7,107,107') mit den Gefässen (3,103,103') auf dem Ofen-Bandförderer (5) zurückhält und insbesondere auch den Wärmeverlust verkleinert;
b) eine Ansaugvorrichtung zum Ansaugen von Frischluft in den Ofen (35,47) ist so ausgebildet, dass die Frischluft beim Ansaugen über die getrockneten austretenden Gefässe (3,103,103') führbar und somit vorwärmbar ist; und
c) mindestens zwei Öfen (47a,47b,47c), die auf verschiedene Bearbeitungsschritte folgen, sind zur Verkleinerung von Wärmeverlusten durch Abstrahlung aneinander anliegend, oder als gemeinsamer Ofen (47) ausgebildet.

6. Anlage nach einem der Ansprüche 1 bis 5, **dadurch gekennzeichnet, dass** mindestens eine Bearbeitungsstation zum Reinigen bzw. Waschen (33) einen magnetischen Wasch-Förderer, vorzugsweise einen Bandförderer, umfasst, der die Gefässe mittels der Paletten durch verschiedene Reinigungsbereiche wie Entfettungs- und Spühlbereiche führt, wobei der Wasch-Förderer so angeordnet ist, dass die Gefässe vor dem Austritt aus jedem Reinigungsbereich mit der Gefässöffnung nach unten gehalten sind, um das möglichst vollständige Austreten von Reinigungsflüssigkeit zu gewährleisten und beim Eintritt in, zumindest vor dem Austritt aus gegebenenfalls vorgesehenen Bädern mit der Öffnung nach oben gehalten sind, um das vollständige Befüllen des Gefässinneren mit Reinigungsflüssigkeit zu ermöglichen.

7. Anlage nach einem der Ansprüche 1 bis 6, **dadurch gekennzeichnet, dass**
a) eine Palettisierstation ( 31') vorgesehen ist, die nach dem Formen, vorzugsweise Fliesspressen, von Gefässen (3,103,103') mit einem um eine Gefässachse angeordneten Mantel, einer am einen Mantelende ausgebildeten Befüllöffnung und einer am anderen Mantelende ausgebildeten Abschlussfläche (130) mit mindestens einem, im wesentlichen in Achsrichtung vom Gefäss nach aussen stehenden, vorzugsweise zentrisch angeordneten, Anschlussteil (132), die Abschlussfläche jedes Gefässes (3,103,103') mit einer Palette (7,107,107') verbindet, insbesondere mit einer Nietvorrichtung, die das Anschlussteil (132) durch eine Anschlussöffnung (117) in der Palette (7,107,107') führt und anschliessend das Anschlussteil (132) auf der dem Gefäss (3,103,103') abgewandten Seite der Anschlussöffnung (117) breit presst;
b) eine Entpalettisierstation (48) vorgesehen ist, die bei bearbeiteten Gefässen (3,103,103') vorzugsweise mittels einer Fräsvorrichtung zumindest einen, insbesondere nietenartig über eine Anschlussöffnung (117) einer Palette (7,107,107') vorstehenden, Bereich eines Anschlussteils (132) entfernt und mittels einer Trennvorrichtung Palette (7,107,107') und Gefäss (3,103,103') getrennt weiterförderbar macht;
c) vorzugsweise eine Palettenreinigungs-Vorrichtung (50) zum Reinigen der Paletten (7,107,107') und/oder eine Palettenlager-Vorrichtung (51) zum Lagern der nicht benötigten Paletten (7,107,107') vorgesehen ist; und
d) eine Rückführ-Fördervorrichtung (49), vorzugsweise ein zumindest teilweise magnetischer Bandförderer, vorgesehen ist, mit der die Paletten (7,107,107') von der Entpalettisierstation (48) vorzugsweise über eine Palettenreinigungs-Vorrichtung (50) und/oder eine Palettenlager-Vorrichtung (51) zur Palettisierstation (31') führbar sind.

8. Transportvorrichtung zum Transportieren von Gefässen (3,103,103') mit einem Magnetförderer (6,8) und einer Anzahl von Paletten (7,107,107'), die mit zu fördernden Gefässen (3,103,103'), insbesondere aus nicht magnetisierbarem Material wie Aluminium, verbindbar und mit einer Paletten-Anschlussfläche (122) an einer bewegbaren Förderfläche (8) des Magnetförderers (6,8), relativ zu dieser verschiebbar, anlegbar sind **dadurch gekennzeichnet, dass** die Paletten (7,107,107') zumindest teilweise aus spontan unmagnetischem aber magnetisierbarem Material hergestellt sind und die Magnetmittel (6) des Magnetförderers (6,8) die Paletten (7,107, 107') mit den Gefässen (3,103,103') mittels magnetischer Kräfte an der Förderfläche (8) haltbar machen.

9. Transportvorrichtung nach Anspruch 8, **dadurch gekennzeichnet, dass** der Magnetförderer (6,8)
a) als Bandförderer mit festen Permanentmagnet-Elementen (6) auf der den Paletten gegenüberliegenden Seite der Förderfläche (8) ausgebildet ist oder
b) eine bewegbare Förderfläche mit mindestens einem Permanentmagnet-Element oder einem Elektromagnet-Element umfasst.

10. Palette für eine Transportvorrichtung nach Anspruch 8 oder 9 und/oder für eine Anlage nach einem der Ansprüche 1 bis 7, mit einer Paletten-Anschlussfläche (122) zum Anlegen an eine Förderfläche (8) und einer Verbindungsfläche (121) mit wenigstens einer Verbindungseinrichtung (117) zum Verbinden der Palette (7,107, 107') mit einem Gefäss (3,103,103'), wobei die Paletten-Anschlussfläche (122) und die Verbindungsfläche (121) im wesentlichen parallel angeordnet sind, **dadurch gekennzeichnet, dass** die Palette (7,107,107') zumindest teilweise aus spontan unmagnetischem aber magnetisierbarem Material hergestellt ist und die Verbindungseinrichtung (117) eine formschlüssige Festhalteverbindung mit einer Gefässabschlussfläche (130) erzielbar macht.

11. Palette nach Anspruch 10, **dadurch gekennzeichnet, dass** mindestens eines der folgenden Merkmale vorgesehen ist
a) die Palette (7,107,107') besitzt eine ringförmige Paletten-Anschlussfläche (122), eine scheibenförmige Verbindungsfläche (121) und eine vorzugsweise zylindriche Distanzhaltefläche (131), die die Anschlussfläche (122) im gewünschten Abstand zur Verbindungsfläche (121) mit dieser verbindet, wobei die Distanzhaltefläche (131) vorzugsweise vom Innenrand der Paletten-Anschlussfläche (122) zum Aussenrand der Verbindungsfläche (121) führt;
b) die Verbindungseinrichtung (117) umfasst wenigstens eine, vorzugsweise eine zentrale, Anschlussöffnung (117) an der ein Anschlussteil (132,132') der Gefässfläche (130) gegebenenfalls reibschlüssig, vorzugsweise aber formschlüssig; insbesondere durch einen Nietvorgang, festsetzbar ist;
c) die Verbindungsfläche (121) umfasst mindestens drei symmetrisch um ein Zentrum, insbesondere eine Anschlussöffnung (117) angeordnete Vorsprünge (133), gegebenenfalls Rippen, die im verbundenen Zustand zwischen der Verbindungsfläche (121) und der Gefässfläche (130) einen Freiraum offen halten und gegebenenfalls zwischen diesen beiden Flächen eine Verbindungsspannung erzeilbar machen;
d) am Aussenrand der Paletten-Anschlussfläche (122) ist eine im wesentlichen senkrecht zur Anschlussfläche (122) ausgebildete, sich von der Anschlussfläche (122) gegen die Verbindungsfläche (121) erstreckende Kontaktfläche (134) vorgesehen.

12. Verfahren zum Transportieren von Gefässen (3,103,103') mit einem Magnetförderer (6,8) und einer Anzahl von Paletten (7,107,107'), bei dem die zu fördernden Gefässe (3,103,103'), insbesondere aus nicht magnetisierbarem Material wie Aluminium, mit Paletten (7,107,107') verbunden und mit einer Paletten-Anschlussfläche (122) an einer bewegbaren Förderfläche (8) des Magnetförderers (6,8), relativ zu dieser verschiebbar, angelegt werden, **dadurch gekennzeichnet, dass** die Paletten (7,107,107') zumindest teilweise aus spontan unmagnetischem aber magnetisierbarem Material hergestellt sind und die Magnetmittel (6) des Magnetförderers (6,8) die Paletten (7,107, 107') mit den Gefässen (3,103,103') mittels magnetischer Kräfte an der Förderfläche (8) halten.

## Claims

1. An installation for the processing of vessels, particularly vessels made of a non-magnetic material such as aluminium, having processing stations for cleaning (33) and/or coating (34, 39-41, 39'-41') and/or drying (35, 47) and having a conveying device, which comprises at least one magnetic conveyor (6-8), for conveying the vessels (3, 103,103') to the and/or within the processing stations, **characterised in that** for each vessel to be conveyed (3, 103, 103') the conveying device comprises a pallet (7, 107, 107') which can be joined to the vessel (3, 103, 103') and which is made of a material which is not spontaneously magnetic but which is magnetisable, wherein a pallet attachment face (122) of the pallet (7, 107, 107') is seated against a movable conveying face (8) of the magnetic conveyor (6, 8) and the pallet is held by the magnetic conveyor (6, 8) by means of magnetic forces on the conveying face (8) so that it is displaceable in relation thereto.

2. An installation according to claim 1, **characterised in that** at least one of the following features is provided:
a) the conveying device (6-8, 107, 107') comprises at least one belt conveyor (46) which is preferably magnetic and which forms a hold-up section upstream of a processing station (34), and which thus temporarily holds back vessels (3, 103, 103') which cannot be conveyed further, wherein the vessels (3, 103, 103') are preferably held on the hold-up section by a retaining device which can be actuated, particularly by a barrier which is abutted against by the pallets (7, 107, 107') of the vessels (3, 103, 103') directly adjoining the retaining device, whilst the conveying face (8) passes through by sliding under the attachment faces (122) of the pallets (7, 107, 107');
b) the conveying device (6-8, 107, 107') comprises guide elements (10) which ensure that the vessels (3, 103, 103') which are moved by the conveying face (8) can be guided along desired paths, particularly by means of guiding contacts with pallets (7, 107, 107'), wherein the guide elements (10) can optionally be moved by an actuating device,
c) the conveying device (6-8, 107, 107') comprises at least one separating device for distributing the conveyed vessels on to at least two sectional line belt conveyors, each of which leads to a processing station;
d) the conveying device comprises at least one combining device for bringing together the vessels from at least two sectional line belt conveyors, and;
e) at least two processing stations for the same processing operation are disposed in parallel in the course of the processing run.

3. An installation according to claims 1 or 2, **characterised in that** for the transfer of vessels (3, 103, 103') to or for the removal of vessels (3, 103, 103') from processing stations comprising holding elements, such as mandrels for external processing operations or sheaths for internal processing operations, for instance, a magnetic conveyor (6, 8) is provided, the conveying face (8) of which in the transfer region is substantially perpendicular to the axis of the holding elements, so that the vessel axis, which is substantially perpendicular to the pallet attachment face (122), is parallel to the axis of the holding elements, and the vessel (3, 103, 103') can be fed to the holding element or removed therefrom by a displacement in the direction of the vessel axis which can be effected mechanically, by compressed air or by electromagnetic actuating elements which act on the pallet.

4. An installation according to any one of claims 1 to 3, **characterised in that** at least one magnetic rotary table, and optionally fixed or moving guides (10) which come into guiding contact with the pallets, are provided for the transfer of vessels (3, 103, 103') to a processing station.

5. An installation according to any one of claims 1 to 4, **characterised in that** at least one processing station for the drying (35, 47) of cleaned or coated vessels is constructed as an oven with continuous oven belt conveyor (5), which is preferably magnetic, wherein the belt conveyor (5), at least in the oven (35, 47), has a hold-up region within which the vessels (3, 103, 103') can be retained for the necessary drying time, and at least one of the following features is optionally provided:
a) the oven (35, 47), at least in its outlet region and preferably in its inlet region also, comprises a closure device which holds back the pallets (7, 107, 107') with the vessels (3, 103, 103') on the oven belt conveyor (5) and which also reduces heat loss in particular;
b) a suction device for the suction of fresh air into the oven (35, 47) is constructed so that during the suction operation the fresh air can be passed over the dried, emerging vessels (3, 103, 103') and can thus be pre-heated; and
c) at least two ovens (47a, 47b, 47c), which follow different operating steps, are constructed adjoining each other for the reduction of heat losses by irradiation, or are constructed as a common oven (47).

6. An installation according to any one of claims 1 to 5, **characterised in that** at least one processing station for cleaning or washing (33) comprises a magnetic washing conveyor, preferably a belt conveyor, which guides the vessels by means of the pallets through different cleaning regions such as degreasing and rinsing regions, wherein the washing conveyor is disposed so that before they emerge from each cleaning region the vessels are held with their vessel openings downwards in order to ensure that the emergence of cleaning liquid is as complete as possible, and on entering or at least before their emergence from baths which are optionally provided are held with their openings upwards in order to facilitate the complete filling of the vessel interior with cleaning liquid.

7. An installation according to any one of claims 1 to 6, **characterised in that**
a) a palletising station (31') is provided, which after the forming, preferably by extrusion, of vessels (3, 103, 103') comprising a shell disposed about a vessel axis, a filling opening formed at one shell end and a closure face (130) formed at the other shell end, and with at least one attachment part (132) which projects outwards from the vessel substantially in the axial direction of the vessel and which is preferably disposed centrally, joins the closure face of each vessel (3, 103, 103') to a pallet (7, 107, 107'), particularly by the use of a riveting device which guides the attachment part (132) through an attachment opening (117) in the pallet (7, 107, 107') and which subsequently presses and widens the attachment part (132) on the side of the attachment opening (117) remote from the vessel (3, 103, 103');
b) a depalletising station (48) is provided, which, for processed vessels, removes, preferably by means of a milling device, at least one region of an attachment part (132), which region protrudes, particularly in the manner of a rivet, beyond an attachment opening (117) of a pallet (7, 107, 107'), and which depalletising station makes the pallet (7, 107, 107') and the vessel (3, 103, 103') conveyable separately again by means of a separating device;
c) a pallet cleaning device (50) is preferably provided for cleaning the pallets (7, 107, 107') and/or a pallet storage device (51) is preferably provided for storing pallets (7, 107, 107') which are not required; and
d) a return device (49), preferably a belt conveyor which is at least partially magnetic, is provided, with which the pallets (7, 107, 107') can be fed from the depalletising station (48) to the palletising station (31'), preferably via a pallet cleaning device (50) and/or a pallet storage device (51).

8. A transport device for transporting vessels (3, 103, 103'), comprising a magnetic conveyor (6, 8) and a number of pallets (7, 107, 107') which can be joined to vessels (3, 103, 103') to be conveyed, particularly vessels made of a non-magnetisable material such as aluminium, a pallet attachment face (122) of which pallets can be placed on a movable conveying face (8) of the magnetic conveyor (6, 8) so that the pallets are displaceable in relation thereto, **characterised in that** the pallets (7, 107, 107') are made, at least in part, of a material which is not spontaneously magnetic but which can be magnetised, and the magnetic means (6) of the magnetic conveyor (6, 8) enable the pallets (7, 107, 107') with the vessels (3, 103, 103') to be held on the conveying face (8) by means of magnetic forces.

9. A transport device according to claim 8, **characterised in that** the magnetic conveyor (6, 8)
a) is constructed as a belt conveyor with fixed permanent magnet elements (6) on the opposite side of the conveying face (8) to the pallets, or
b) comprises a movable conveying face having at least one permanent magnet element or at least one electromagnet element.

10. A pallet for a transport device according to claims 8 or 9 and/or for an installation according to any one of claims 1 to 7, having a pallet attachment face (122) for placement on a conveying face (8), and having a joining face (121) comprising at least one joining device (117) for joining the pallet (7, 107, 107') to a vessel (3, 103, 103'), wherein the pallet attachment face (122) and the joining face (121) are substantially parallel, **characterised in that** the pallet (7, 107, 107') is made, at least in part, of a material which is not spontaneously magnetic but which is magnetisable, and the joining device (117) makes it possible to achieve a secured, positive connection to a vessel closure face (130).

11. A pallet according to claim 10, **characterised in that** at least one of the following features is provided:
a) the pallet (7, 107, 107') has an annular pallet attachment face (122), a disc-shaped joining face (121), and a spacer face (131) which is preferably cylindrical and which joins the attachment face (122) to the joining face (121) at the desired spacing from the latter, wherein the spacer face (131) preferably leads from the inner edge of the pallet attachment face (122) to the outer edge of the joining face (121);
b) the joining device (117) comprises at least one attachment opening (117), which is preferably central, to which an attachment part (132, 132') of the vessel face (130) can be fixed, optionally with a frictional fit but preferably with a positive fit, particularly by a riveting operation;
c) the joining face (121) comprises at least three projections (133), optionally ribs, which are symmetrically disposed about a centre, particularly about an attachment opening (117), which projections in the joined state keep a free space open between the joining face (121) and the vessel face (130) and which optionally make it possible to achieve a joining stress between these two faces;
d) a contact face (134), which is constructed substantially perpendicular to the attachment face (122) and which extends from the attachment face (122) towards the joining face (121), is provided at the outer edge of the pallet attachment face (122).

12. A process for transporting vessels (3, 103, 103'), comprising a magnetic conveyor (6, 8) and a number of pallets (7, 107, 107'), wherein the vessels (3, 103, 103') to be conveyed, particularly vessels made of a non-magnetic material such as aluminium, are joined to pallets (7, 107, 107') and a pallet attachment face (122) of the vessels is placed on a movable conveying face (8) of the magnetic conveyor (6, 8) so that the pallets are displaceable in relation thereto, **characterised in that** the pallets (7, 107, 107') are made, at least in part, of a material which is not spontaneously magnetic but which is magnetisable, and the magnetic means (6) of the magnetic conveyor (6, 8) hold the pallets (7, 107, 107') with the vessels (3, 103, 103') on the conveying face (8) by means of magnetic forces.

## Revendications

1. Installation de traitement de contenants, réalisés en particulier en matière non magnétisable telle que l'aluminium, comportant des stations de traitement pour le nettoyage (33) et/ou le revêtement (34, 39-41, 39'-41') et/ou le séchage (35, 47) et un dispositif de transport présentant au moins un transporteur magnétique (6-8) et destiné au transport des contenants (3, 103, 103') vers les et/ou dans les stations de traitement, caractérisée en ce que le dispositif de transport comprend pour chaque contenant (3, 103, 103') à transporter, une palette (7, 107, 107') pouvant être assemblée avec le contenant (3, 103, 103') et réalisée au moins en partie dans une matière non magnétique de manière spontanée mais magnétisable, la palette (7, 107, 107') étant ajustée, par une surface de jonction de palette (122), contre une surface de transport (8) mobile du transporteur magnétique (6, 8) et étant maintenue, par le transporteur magnétique (6, 8) au moyen de forces magnétiques, sur la surface de transport (8) de façon à pouvoir se déplacer par rapport à cette dernière.

2. Installation selon la revendication 1, caractérisée en ce qu'au moins l'une des caractéristiques suivantes est prévue,
a) le dispositif de transport (6-8, 107, 107') comprend au moins un transporteur à bande (46) de préférence magnétique qui forme une voie de retenue avant une station de traitement (34) et en même temps, retient temporairement les contenants (3, 103, 103') ne pouvant pas être avancés plus loin, les contenants (3, 103, 103') étant retenus sur la voie de retenue de préférence avec un dispositif de retenue actionnable, en particulier une barrière contre laquelle butent les palettes (7, 107, 107') des contenants (3, 103, 103') directement adjacents au dispositif de retenue, tandis que la surface de transport (8) passe en glissant sous les surfaces de jonction (122) des palettes (7, 107, 107') ;
b) le dispositif de transport (6-8, 107, 107') comprend des éléments de guidage (10) qui peuvent guider, le long de la voie souhaitée, les contenants (3, 103, 103') déplacés par la surface de transport (8), en particulier par des contacts de manipulation avec les palettes (7, 107, 107') et servant de guidage, les éléments de guidage (10) pouvant être déplacés le cas échéant par un dispositif d'actionnement ;
c) le dispositif de transport (6-8, 107, 107') comprend au moins un dispositif de séparation pour la répartition des contenants transportés, sur au moins deux transporteurs à bande de lignes partielles qui mènent respectivement vers une station de traitement ;
d) le dispositif de transport comprend au moins un dispositif de regroupement pour le regroupement des contenants d'au moins deux transporteurs à bandes de lignes partielles et
e) au moins deux stations de traitement pour le même traitement sont disposées en parallèle dans le déroulement de traitement.

3. Installation selon la revendication 1 ou 2, caractérisée en ce que, pour le transfert des contenants (3, 103, 103') aux stations de traitement ou pour l'enlèvement des contenants (3, 103, 103') des stations de traitement avec des éléments de maintien tels qu'éventuellement des mandrins pour des traitements extérieurs ou des douilles pour des traitements intérieurs, il est prévu un transporteur magnétique (6, 8) dont la surface de transport (8) dans la zone de transfert est sensiblement perpendiculaire à l'axe des éléments de maintien, si bien que l'axe des contenants sensiblement perpendiculaire à la surface de jonction des palettes (122) est parallèle à l'axe des éléments de maintien et que le contenant (3, 103, 103') peut être amené à l'élément de maintien par un déplacement qui est exécutable mécaniquement, à l'air comprimé ou bien avec des éléments d'actionnement électromagnétiques agissant sur la palette, et qui va dans le sens de l'axe des contenants, ou peut être enlevé dudit élément de maintien.

4. Installation selon l'une quelconque des revendications 1 à 3, caractérisée en ce qu'au moins un plateau tournant magnétique et, le cas échéant, des guidages (10) fixes ou mobiles entrant en contact de guidage avec les palettes sont prévus pour le transfert des contenants (3, 103, 103') à une station de traitement.

5. Installation selon l'une quelconque des revendications 1 à 4, caractérisée en ce qu'au moins une station de traitement est conçue pour le séchage (35, 47) de contenants nettoyés ou revêtus, en tant qu'étuve avec un transporteur à bande pour étuve (5), le transporteur à bande (5) traversant et de préférence magnétique, comprenant au moins dans l'étuve (35, 47) une zone de retenue dans laquelle les contenants (3, 103, 103') peuvent être retenus pendant le temps de séchage nécessaire et en ce que, le cas échéant, au moins l'une des caractéristiques suivantes est prévue :
a) le four (35, 47) comprend au moins dans la zone de sortie mais de préférence aussi dans la zone d'entrée, un dispositif de fermeture qui retient les palettes (7, 107, 107') avec les contenants (3, 103, 103') sur le transporteur à bande de l'étuve (5) et, en particulier, réduit également la perte de chaleur ;
b) un dispositif d'aspiration pour aspirer l'air frais dans l'étuve (35, 47) est réalisé de telle sorte que lors de l'aspiration, l'air frais peut être guidé par l'intermédiaire des contenants séchés en cours de sortie (3, 103, 103') et par conséquent, peut être préchauffé ; et
c) au moins deux étuves (47a, 47b, 47c), qui suivent différentes étapes de traitement, sont juxtaposées pour la réduction de pertes de chaleur par dissipation ou sont conçues sous forme d'étuve commune (47).

6. Installation selon l'une quelconque des revendications 1 à 5, caractérisée en ce qu'au moins une station de traitement pour le nettoyage ou le lavage (33) comprend un transporteur de lavage magnétique, de préférence un transporteur à bande qui, à l'aide des palettes, conduit les contenants à travers différentes zones de nettoyage telles que les zones de dégraissage et de rinçage, le transporteur de lavage étant disposé de telle sorte que les contenants sont maintenus avec leur ouverture orientée vers le bas avant la sortie de chaque zone de nettoyage afin de garantir l'évacuation autant que possible complète du liquide de nettoyage et que, lors de l'entrée dans les, au moins avant la sortie des, bains prévus le cas échéant, les contenants sont maintenus avec leur ouverture orientée vers le haut afin de permettre le remplissage complet du contenant avec le liquide de nettoyage.

7. Installation selon l'une quelconque des revendications 1 à 6, caractérisée
a) en ce qu'il est prévu une station de palettisation (31') qui, après le formage, de préférence l'extrusion, de contenants (3, 103, 103') avec un corps disposé autour d'un axe de contenant, une ouverture de remplissage réalisée à l'une des extrémités du corps et une surface de fermeture (130) réalisée à l'autre extrémité du corps avec au moins un élément de jonction (132) se trouvant sensiblement dans le sens de l'axe du contenant vers l'extérieur et disposé de préférence de façon centrée, assemble la surface de fermeture de chaque contenant (3, 103, 103') avec une palette (7, 107, 107'), en particulier avec un dispositif à rivets qui guide l'élément de jonction (132) à travers une ouverture de jonction (117) dans la palette (7, 107, 107') et presse ensuite largement l'élément de jonction (132) sur le côté de l'ouverture de jonction (117) opposé au contenant (3, 103, 103') ;
b) en ce qu'il est prévu une station de dépalettisation (48) qui, dans le cas des contenants traités (3, 103, 103'), enlève de préférence à l'aide d'un dispositif de fraisage, au moins une partie d'un élément de jonction (132), cette partie formant notamment saillie à la manière d'un rivet au-dessus d'une ouverture de jonction (117) d'une palette (7, 107, 107'), et qui permet de transporter séparément la palette (7, 107, 107') et le contenant (3, 103, 103') à l'aide d'un dispositif de séparation ;
c) en ce qu'il est prévu de préférence un dispositif de nettoyage de palettes (50) pour le nettoyage des palettes (7, 107, 107') et/ou un dispositif de stockage de palettes (51) pour le stockage des palettes (7, 107, 107') inutiles; et
d) en ce qu'il est prévu un dispositif de transport de retour (49), de préférence un transporteur à bande au moins en partie magnétique, qui permet de guider les palettes (7, 107, 107') de la station de dépalettisation (48) vers la station de palettisation (31'), de préférence par l'intermédiaire d'un dispositif de nettoyage des palettes (50) et/ou d'un dispositif de stockage des palettes (51).

8. Dispositif de transport destiné au transport de contenants (3, 103, 103') avec un transporteur magnétique (6, 8) et un nombre de palettes (7, 107, 107') qui peuvent être assemblées avec des contenants (3, 103, 103') à transporter, réalisés notamment en matière non magnétisable telle que l'aluminium et qui peuvent être ajustées par une surface de jonction de palettes (122) contre une surface de transport (8) mobile du transporteur magnétique (6, 8) de façon à pouvoir se déplacer par rapport à ladite surface, caractérisé en ce que les palettes (7, 107, 107') sont fabriquées au moins en partie en matière non magnétique de manière spontanée mais magnétisable et en ce que les moyens magnétiques (6) du transporteur magnétique (6, 8) permettent de maintenir les palettes (7, 107, 107') avec les contenants (3, 103, 103') sur la surface de transport (8) au moyen de forces magnétiques.

9. Dispositif de transport selon la revendication 8, caractérisé en ce que le transporteur magnétique (6, 8) a) est conçu sous forme de transporteur à bande avec des éléments fixes d'un aimant permanent (6) sur le côté de la surface de transport (8) opposé aux palettes ou b) comprend une surface de transport mobile avec au moins un élément d'aimant permanent ou un élément d'électroaimant.

10. Palette pour un dispositif de transport selon la revendication 8 ou 9 et/ou pour une installation selon l'une quelconque des revendications 1 à 7, comportant une surface de jonction (122) de palettes pour l'ajustement contre une surface de transport (8), et une surface d'assemblage (121) avec au moins un dispositif d'assemblage (117) pour l'assemblage de la palette (7, 107, 107') avec un contenant (3, 103, 103'), la surface de jonction (122) de palettes et la surface d'assemblage (121) étant disposées sensiblement parallèles l'une à l'autre, caractérisée en ce que la palette (7, 107, 107') est réalisée au moins en partie en matière non magnétique de manière spontanée mais magnétisable et en ce que le dispositif d'assemblage (117) permet d'obtenir un assemblage fixe par coopération de formes avec une surface de fermeture (130) du contenant.

11. Palette selon la revendication 10, caractérisée en ce qu'il est prévu au moins l'une des caractéristiques suivantes,
a) la palette (7, 107, 107') possède une surface annulaire de jonction (122) de palette, une surface d'assemblage (121) en forme de disque et une surface de maintien de distance (131) de préférence cylindrique qui assemble la surface de jonction (122) à la distance souhaitée par rapport à la surface d'assemblage (121), avec la surface d'assemblage (121), la surface de maintien de distance (131) conduisant de préférence du bord intérieur de la surface de jonction (122) des palettes vers le bord extérieur de la surface d'assemblage (121) ;
b) le dispositif d'assemblage (117) comprend de préférence au moins une ouverture de jonction (117) centrale à laquelle peut être fixé un élément de jonction (132, 132') de la surface des contenants (130), le cas échéant par frottement, mais de préférence par coopération de formes, en particulier par un assemblage à rivets ;
c) la surface d'assemblage (121) comprend au moins trois éléments formant saillie (133) et disposés symétriquement autour d'un centre, en particulier une ouverture de jonction (117), le cas échéant des nervures qui, à l'état assemblé, maintiennent un espace libre ouvert entre la surface d'assemblage (121) et la surface des contenants (130) et, le cas échéant, permettent d'obtenir une tension d'assemblage entre ces deux surfaces ;
d) sur le bord extérieur de la surface de jonction des palettes (122), il est prévu une surface de contact (134) réalisée sensiblement perpendiculairement à la surface de jonction (122) et s'étendant de la surface de jonction (122) contre la surface d'assemblage (121).

12. Procédé de transport de contenants (3, 103, 103') avec un transporteur magnétique (6, 8) et un nombre de palettes (7, 107, 107'), dans lequel les contenants (3, 103, 103') à transporter, réalisés notamment en matière non magnétisable telle que l'aluminium, sont assemblés avec des palettes (7, 107, 107') et sont ajustés avec une surface de jonction de palettes (122) contre une surface de transport (8) mobile du transporteur magnétique (6, 8), de façon à pouvoir se déplacer par rapport à ladite surface, caractérisé en ce que les palettes (7, 107, 107') sont fabriquées au moins en partie en matière non magnétique de manière spontanée mais magnétisable et en ce que les moyens magnétiques (6) du transporteur magnétique (6, 8) maintiennent les palettes (7, 107, 107') avec les contenants (3, 103, 103') sur la surface de transport (8) au moyen de forces magnétiques.
